(19) Europäisches Patentamt
European Patent Office
Office européen des brevets

(11) Publication number : 0 634 463 A2

# (12) EUROPEAN PATENT APPLICATION

(21) Application number : 94304033.7

(22) Date of filing : 06.06.94

(51) Int. Cl.[6] : **C09D 7/00**, C09D 7/12

(30) Priority : 22.06.93 GB 9312827
22.06.93 GB 9312828

(43) Date of publication of application :
18.01.95 Bulletin 95/03

(84) Designated Contracting States :
AT BE CH DE DK ES FR GB GR IE IT LI LU NL PT SE

(71) Applicant : IMPERIAL CHEMICAL INDUSTRIES PLC
Imperial Chemical House,
Millbank
London SW1P 3JF (GB)

(72) Inventor : Kelly, Mary Eleanor
87 Victoria Road
Slough, Berks SL2 5NF (GB)
Inventor : Roulstone, Brian John
62 Sandringham Court,
Burnham
Slough, Berks SL1 6JZ (GB)
Inventor : Colclough, Michael Leonard
"Glengariff",
Devonshire Road
Weyrbridge, Surrey KT1 8HB (GB)

(74) Representative : Cooper, Alan Victor et al
Patents and Trade Marks Section
Legal Affairs Department
ICI Paints
Wexham Road
Slough SL2 5DS (GB)

## (54) Paint containing white opacifier.

(57) A brighter white opacified paint, which contains a conventional film-forming polymer together with a conventional optical brightener and particles anatase titanium dioxide and/or zinc sulphide as the white opacifier. Unlike the rutile form of titanium dioxide, the anatase form or zinc sulphide enables the optical brightener to function usefully in the presence of the white opacifier especially when the amount of optical brightener present is not more than 10 micromoles/g of the non-volatiles content of the paint. Preferably the particles are encapsulated in polymer or attached to a discontinuous polymer barrier comprising particles of organic polymer in order to space them apart and improve opacity. A small amount of fluorescence is also obtainable from chloride-produced rutile.

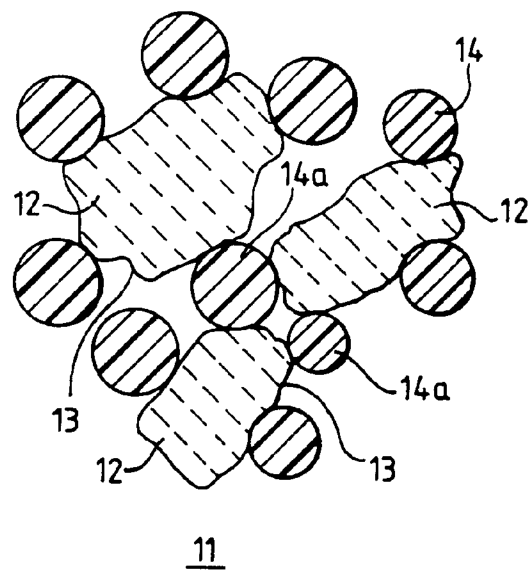


Fig.2.

EP 0 634 463 A2

This invention relates to paints containing white opacifier and having improved brightness. The paints are suitable for application at ambient temperatures (i.e. 0 to 40°C) to surfaces of the type found on buildings or their fittings or furnishings. White opacifiers are pigments which enable a dried coat of paint to hide marks on the surface to which the coat has been applied. If colours other than white are wanted, the white opacifier will be used in combination with other pigments or dyes which impart the wanted colour. The invention is especially useful with paints which dry to give matt or silk (i.e. mid-sheen) finishes of the type popular for painting walls and ceilings, and it is particularly beneficial in white paints and paints of a light pastel shade. Silk paints usually contain from 8 to 15% by volume of white opacifier whilst matt paints usually contain from 11 to 20% by volume.

Apart from white lead (now regarded as too poisonous for general use), zinc sulphide was probably the earliest modern white opacifying pigment. It was then largely displaced by the titanium dioxides which have higher opacifying powers.

Two forms of titanium dioxide have been used commercially in paints and the like. They are anatase and rutile. Both were made by the sulphate process as described in Volume 3 of the third edition of Kirk-Othmer's "Encyclopedia of Chemical Technology" published in 1983 by John Wiley & Sons of New York, see pages 145 to 148. Anatase was the first form to become commercially available, possibly because lower temperatures are used in its manufacture. However, rutile has the higher density and refractive index and so is more effective as an opacifier. It is often said that rutile can be around 30% more effective as an opacifier than anatase.

The early availability of anatase meant that it was the form of titanium dioxide originally used in paints. However, during the 1940's sulphate-produced rutile became available and its greater effectiveness as an opacifier meant that it began to displace anatase from paints. Both forms of titanium dioxide can promote the degradation of many of the organic film-forming polymers used in paints, but during the 1950's it was discovered that this degradation could be substantially reduced by coating rutile with up to as much as 20 wt% of hydratable inorganic oxides such as alumina silica, zirconia and/or tin oxide. Accordingly, during the 1950's, coated sulphate-produced rutile displaced anatase from paints suitable for application at ambient temperatures to surfaces of the type found on buildings or vehicles or their fittings or furnishings. Coated sulphate-produced rutile is still used in such paints today even though it imparts an unwelcome yellowish tinge to the dried coatings which is perceived by the human eye as detracting from the brightness of the coatings when seen alongside a standard barium sulphate white.

Titanium dioxide white opacifiers are commercially available as particles having a number average unagglomerated particle size of from 100 to 400 nm. By number average "unagglomerated" particle size is meant the number average particle size as determined when substantially all of the particles are spaced apart from each other. The number average particle sizes quoted in this Specification are all based on unagglomerated particles. Particles having a number average particle size of from 200 to 300 nm are preferred because this is the optimum size for imparting opacity.

During 1958, rutile titanium dioxide began to be made by the chloride process in which crude rutile is treated with chlorine to convert it to titanium tetrachloride which is subsequently re-oxidised to form purer titanium dioxide. The chloride process is also described by Kirk-Othmer ibid.

During the 1960's, the use of optical brighteners (also called fluorescent whitening agents) developed. Optical brighteners are fluorescent compounds which absorb near-ultra-violet (300 to 400 nm) light and then fluoresce emitting visible light so making the substrate from which they are emitting appear brighter. Optical brighteners are used to brighten the appearance of paper, soaps (i.e. detergents), textiles and also thermoplastics, see the opening paragraph of Chapter 14 of the third edition of the "Plastics Additives Handbook" edited by R Gachter and H Muller and published in 1990 by Hanser Publishers of Munich. The contents of this Chapter 14 are herein incorporated by reference. No corresponding commercial use of optical brighteners in paints of the type used on buildings has occurred. The problem is that the rutile titanium dioxide pigments used in modern paints strongly absorb most of the ultra-violet light in the waveband 330 to 400 nm which is needed to excite suitable optical brighteners.

In order to overcome the problem of near ultra-violet light being absorbed by titanium dioxide pigment, European Patent Application EP 0 497 507A (published in 1992) or United States Patent Specification US 5 135 568 (the contents of which are herein incorporated by reference) proposed the use- of voided polymer particles as an alternative to opacifying pigments such as titanium dioxide. Organic polymers do not absorb significant amounts of near ultra-violet light and so virtually all the light remains available to excite the optical brightener. Alternatively, it has been proposed to incorporate optical brightener into a clear varnish (i.e. a varnish not containing titanium dioxide opacifier) and then to paint a coat of the varnish onto a dried coat of paint which does contain rutile white opacifier. This achieves a brighter effect because most of any incident ultraviolet light is absorbed and fluoresced by the optical brightener in the clear coat of varnish before it can reach any titanium dioxide. However such use of a varnish on top of an already applied coat of paint does of course necessitate an extra painting operation which adds to the expense of painting.

It is an object of this invention to provide significantly brighter opacified paints suitable for application at ambient temperature by the use of white opacifier and an optical brightener in commercially acceptable concentrations.

Accordingly this invention provides a paint containing white opacifier which paint is suitable for application at ambient temperature and also comprises volatile carrier liquid (for example water or organic liquid) and at least one film-forming polymer (including copolymer) wherein at least some white opacifier is chosen from particles of anatase titanium dioxide and/or zinc sulphide and the paint also comprises optical brightener of a type which can absorb light in the waveband 330 to 400 nm and then re-emit absorbed energy as fluorescence. It has been discovered that dried coats of paint and the like containing anatase or zinc sulphide allow passage of enough ultra violet light in the waveband 330 to 400 nm to produce a significantly noticeable fluorescence of the optical brightener. Moreover, dried coats containing anatase or zinc sulphide together with optical brightener have been found to impart a blueish tinge which further increases brightness and is more psychologically acceptable to the eye.

Anatase titanium dioxide is currently available for use in paper-making as particles having a number average particle size of from 100 to 200nm (usually 120 to 160 nm). It would be preferred to use particles having a number average particle size of at least 200nm but not more than 300nm and most preferably 200 to 250 nm in order to achieve better opacity. It has been discovered that if used in paint, anatase should preferably comprise from 5 to 25 vol% of the non-volatile content of the paint. Each particle should preferably be coated with at least one hydratable inorganic oxide such as alumina, silica, zirconia or tin oxide, usually in amounts of up to 20 wt% of the weight of the particle.

Zinc sulphide is available either as "Sachtolith" which is predominantly zinc sulphide or as lithopone which is a mixture of zinc sulphide and barium sulphate. "Sachtolith" is supplied by Sachtleben GmbH of Duisberg, Germany. "Sachtolith" is more expensive than lithopone but it has been found to have a greater opacifying power in paint. The number average particle sizes of commercially available "Sachtoliths" and of the zinc sulphide component of lithopones lie in the ranges 150 to 400 nm, but the preferred range is 200 to 300 nm for both. The barium sulphate component of the lithopone preferably has a number average particle size of from 600 to 800 nm. The zinc sulphide is preferably used in the same concentrations as anatase.

The optical brightener is usually a colourless compound and it should absorb a high proportion of any incident ultra-violet light in the waveband 330 to 400 nm and then fluoresce a substantial proportion of it as light of wavelength above 400nm. Fluorescence from a dried coat of the paint enables the coat to emit more light than would be the case if the coat emitted only reflected and scattered light with the result that the fluorescence causes the coat to appear brighter to the human eye provided of course that the coat is illuminated by natural light or by artificial light containing ultra-violet light in the waveband 330 to 400 nm.

Useful optical brighteners are mentioned in Chapter 14 of Gächter and Müller's "Plastics Additives Handbook" and EP 0 497 507A. Typical examples include triazine-phenylcoumarins, benzotriazole-phenyl coumarins, naphthotriazole-phenylcoumarins and bis-benzoxazoles, for example 2,2[1]-(2,5-thiophenediyl)-bis(5-(1,1-dimethyl ethyl)) benzoxazole of the graphic formula:

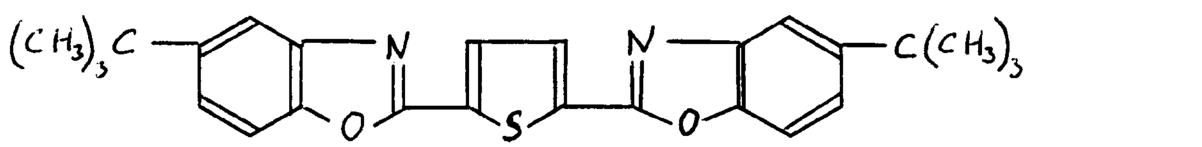

Preferred optical brighteners have a peak absorption lying in the range 350 to 400 nm and combinations of two or more optical brighteners having peak absorptions at different wavelengths can be beneficial. For example an optical brightener having a peak absorption in the waveband 350 to 370 nm might be usefully combined with a different one having a peak absorption in the waveband of upwards from 370 to 390 nm. The optical brightener is preferably used in amounts of from 0.1 to 10 micromole per g of non-volatile content of the paint and the most preferred range is from 1 to 5 micromole/g. Non-volatile content may be measured according to ASTM Test D 2697-86.

The film-forming polymer may be any polymer (including copolymer) of the type conventionally used as a binder material in the formulation of paints. It may be present as a dispersion of polymer particles or as a solution of polymer in the carrier liquid. Preferably polymer which is intended for use in a dispersion should have a minimum film-forming temperature of not more than 40°C to ensure good film-forming at ambient temperature. Minimum film-forming temperature may be measured by ASTM Test 2354-91. Usually a particulate film-forming polymer will be a copolymer of monomers, one of whose homopolymers has a high minimum film-forming temperature whilst the homopolymer of the other will have a low film-forming temperature. The proportion of co-monomers will then be chosen so as to give a copolymer whose minimum film-forming temperature is not more than 40°C and preferably above -10°C. Typical monomers whose homopolymers have high minimum film-forming temperatures include carboxylic acids such as acrylic, methacrylic, crotonic or itaconic acids or fumaric or maleic anhydrides or non-acid monomers such as methyl methacrylate, vinyl acetate and styrene. Typical monomers whose homopolymers have low minimum film-forming temperatures include ethyl acrylate, 2-ethyl hexyl acrylate, methyl acrylate, butyl acrylate and the material commercially available from the Shell Chemical Company under the trade name "Vinyl Versatate" which is believed to be the vinyl ester of a mixture of branched chain acids which contains around 10 carbon atoms. Useful soluble film-forming polymers include the so-called alkyd resins described for example on pages 165 to 170 of the third edition of the book "Introduction to Paint Chemistry" by G P A Turner published in 1988 by Chapman and Hall of London. The contents of these pages are herein incorporated by reference. Alkyd resins are normally used as solutions in white spirit. Useful water-soluble film-forming polymers include copolymers containing co-monomers of the type listed above in connection with particulate film-forming polymers provided that they contain enough of a salt of a copolymerised carboxylic acid to make the copolymer water-soluble. Examples of such copolymers are described in detail in European Patent Specification EP 0 425 825A or United States Patent Specification US 5 264 482, the contents of which are herein incorporated by reference.

The paints according to this invention are suitable for use with thixotropic agents, that is to say compounds which confer a structure on the paint which is temporarily destroyed when the paint is subjected to shear as for example when it is being applied to a surface by brush, roller or pad. Preferred thixotropic agents include clays such as bentonite clays, titanium chelates or zirconium chelates such as those described in British Patent Specifications GB 922 456 or GB 1 029 723, the contents of which patent specifications are herein incorporated by reference.

The paints according to this invention may also contain extenders such as clays (especially kaolin or bentonites), chalk or silicas even though extenders usually detract from the brightness of a dried coat of paint. Extenders confer a matt or partial matt finish to the dried coats of paint so making them particularly suitable for painting walls or ceilings. The paints may also comprise other ingredients of the type conventionally used in their formulation, for example other pigments including the white opacifying hollow polymer particles as described in EP 0 497 507A or US 5 135 568 and dyes, non-thixotropic thickeners, fungicides, anti-skinning agents, flow improvers and so-called "driers" (i.e. crosslinking promoters) where the film-forming polymer dries by autoxidation. Care should be taken to avoid additives which are significant absorbers of near ultra-violet light.

In an improvement to this invention, there is chosen at least one optical brightener whose absorption peak lies in the waveband 370 to 400 nm and the anatase or zinc sulphide opacifiers are used in combination with a minor proportion (i.e. up to 50 wt% and preferably up to 25 wt%) of rutile. It has been found that such combinations can utilise the greater opacifying power of rutile without the rutile having too serious an extinguishing effect on the ultra-violet light. The extinguishing effect can be further reduced by a careful selection of the relationship between the particle sizes of the anatase or zinc sulphide and the rutile.

It has just been discovered that rutile made by the chloride process allows an amount of fluorescence which is discernable by the eye as giving a significant increase in brightness, albeit an increase which is much less than that obtainable using anatase or zinc sulphide. The use of chloride-produced rutile therefore permits the achievement of a modest amount of fluorescence whilst retaining the greater opacifying power of rutile. Accordingly, in a modification of this invention, from 0 to 100 wt% of the anatase or zinc sulphide is replaced by chloride-produced rutile.

There are only limited opportunities for improving the optical properties of a coating by using opacifier. The use of large amounts of inorganic opacifier not only increases the cost of a coating composition, but more unfortunately it also results in an increased risk of agglomeration of opacifier and agglomeration causes a loss of opacifying power. Furthermore, large amounts of opacifier also result in an inevitable reduction in the sheen and coin mar resistance of the eventual dried coating. ("Coin mar" is the marking of a dried coating when the milled edge of a coin or similar metal object is rubbed against the surface of the coating). Reduction in sheen and coin mar resistance occurs because the surfaces of the inorganic opacifier particles are both highly irregular and hard and some of them are found in or just below the surface of the dried film where they are sufficiently accessible to affect adversely sheen and coin mar resistance.

Recently, proposals have been made to encapsulate opacifier particles in organic polymer by for example polymerising monomer in water in the presence of the particles and under conditions such that the polymer formed coats the surface of the particles. The polymer coating therefore creates a physical barrier around the particles which is firmly attached to the particles. Two such proposals are made respectively in European Patent Specification EP 0 392 065A and in United States Patent Specification US 4 771 086 (the contents of both of which are herein incorporated by reference). The polymer barrier inhibits agglomeration of the opacifier

particles so avoiding the loss of opacifying power which would otherwise occur if the surfaces of two adjacent unmodified particles were allowed to approach each other closely. In addition, provided that the polymer barrier is thick enough, total encapsulation will also render the irregular and hard titanium dioxide surface less irregular and softer so improving sheen and coin mar resistance. Total encapsulation of the opacifier does not hinder the activity of the optical brightener and so it is possible to use encapsulated opacifiers.

The use of a polymer barrier which totally encapsulates the opacifier particles or which comprises irregularly shaped nodules can be wasteful of polymer and so a further refinement of this invention employs a polymer-modified particulate anatase or zinc sulphide comprising particles of anatase and/or zinc sulphide having a number average particle size (Dt) of from 100 to 400 nm attached to a discontinuous polymer barrier comprising particles of organic polymer having a particle size which allows them to be accommodated around the anatase or zinc sulphide particles wherein

a) the particles of polymer are pre-formed prior to their attachment to the anatase or zinc sulphide particles,

b) the particles are pre-formed either by

(i) a free radical initiated aqueous emulsion or dispersion polymerisation performed in the presence of a water-soluble compound which during the course of the polymerisation bonds chemically to the polymer as it is being formed,

or (ii) a polymerisation which is followed by the chemical bonding of a water-soluble compound to the polymer and

c) the water-soluble compound is a polymeric material which is chemically bondable to the polymer, which contains at least one moiety adsorbable onto a surface of the titanium dioxide particles and preferably which has a weight average molecular weight of at least 1500 prior to attachment to the polymer.

A fuller description of this refinement is provided in European Patent Specification EP 0 549 163B, the contents of which are herein incorporated by reference.

Pre-formation of the polymer particles in the absence of the opacifier particles results in the formation of predictably (usually essentially spherically) shaped solid particles having a pre-determinable range of particle sizes. Because the shape and size of the particles is predetermined before their attachment to the anatase or zinc sulphide, their ability to pack around the opacifier particles is pre-determined by their preformed shape and size. In particular they do not touch or closely approach more than a small proportion of the surfaces of the opacifier particles but because of their regular shape and size, they provide maximum projection from those surfaces so that they are still able to function as a discontinuous barrier. The barrier inhibits agglomeration and lessens if not totally prevents the reductions in sheen and coin mar resistance consequent on introducing opacifier particles into a coating composition. This enables polymer to be used very efficiently and further offset the loss of opacifying power consequent on the selection of anatase or zinc sulphide as the white opacifier.

The invention is further illustrated by the following Examples of which A and B are comparative. In the Examples, fluorescence is assessed by means of the Fluorescence Measurement Technique described below.

**Fluorescence Measurement Technique**

The fluorescence of a dried coat of paint is measured by first applying a coating of the undried paint onto a transparent sheet 75μm thick of "Melinex" polyethylene terephthalate film using a conventional block spreader. "Melinex" film is available from Imperial Chemical Industries PLC in Welwyn Garden City, England. The coating is then dried to remove all volatile carrier liquid by heating for five minutes in a microwave oven and subsequently allowed to cool slowly over a period of two hours by standing at room temperature (18°C). The thickness of the dried film of paint must be sufficient to hide totally the black surface of a standard black tile when the "Melinex" film bearing the dried film is laid on the black tile.

The dried film is laid on the standard black tile and reflectance measurements are taken simultaneously from the film and from a standard reflecting surface which is positioned on the inside of the integrating sphere of a Macbeth 7000 spectrophotometer fitted with a xenon lamp. Macbeth spectrophotometers are available from Kollmorgan (UK) Ltd of Altringham, England. The reflectance of the dried film is measured at 10 nm intervals across the wavelength band of 400 to 700nm in order to identify (to the nearest 10nm) the wavelength ($\lambda$ max) at which the maximum intensity of light emitted from the dried film is achieved. This emitted light will comprise both light of wavelength $\lambda$ max which was initially incident on the dried film as light of $\lambda$ max and then simply reflected or scattered back and also light of $\lambda$ max which was initially incident as light of a shorter wavelength which then fluoresced to emerge also as light of $\lambda$ max. The intensity of light of $\lambda$ max emitted from the dried film is expressed as a percentage of the intensity of light of $\lambda$ max emitted from the standard surface and then recorded as an indication of the amount of fluorescence occurring.

**EXAMPLES 1 AND 2 AND COMPARATIVE EXAMPLES A AND B**

**Illustration of Fluorescence obtainable by this Invention**

These Examples relate to fluorescence measurements performed on silk paints containing titanium dioxide white opacifier specially formulated for application to the walls and ceilings of domestic houses. The paints of Examples 1, A and B contained ingredients as summarised in Table 1 and its footnotes. The paint of Comparative Example B was a

TABLE 1

| Ingredients | Examples Parts by Weight | | | |
|---|---|---|---|---|
| | 1 | A | 2 | B |
| Optical Brightener | 0.06 | 0 | 0.06 | - |
| Uncoated anatase titanium dioxide | 24.8 | 24.8 | - | - |
| Coated chloride-produced rutile titanium dioxide | - | - | 26.1 | - |
| Particulate Acrylic Copolymer | 18.16 | 17.74 | 18.16 | - |
| Others (see later) | 56.98 | 57.46 | 55.68 | - |
| Reflectance: % of incident light of λ max 430nm | 104.2 | 87.8 | 96.9 | 88.0 |

Footnotes:

Optical Brightener: 2,2[1]-(2,5-thiophenyl)-bis(5-(1.1-dimethylethyl))benzoxazole

Anatase and Rutile: Number average particle size: 150nm
The rutile was coated with silica and alumina.

Acrylic copolymer: Number average particle size: 257nm
: Minimum Film Forming temperature: -2°C

commercially available aqueous proprietary coated sulphate-produced rutile titanium dioxide-pigmented silk latex paint sold for application to the walls and ceilings of domestic houses. Fuller details of the ingredients in the paints of Examples 1, 2 and A and of the procedures used to make them are given later in this Specification.

The paints of Examples 1, 2 and A were each in turn subjected to the Fluorescence Measurement Technique described earlier and the percentages of light of wavelength λ max 430nm were recorded and shown in Table 1. Table 1 shows that for the paint of Example 1 which contained both anatase and the optical brightener, the percentage of reflected light at 430nm exceeded 100%. This accorded with the fact that the paint of Example 1 appeared considerably brighter to the human eye in natural light than did that of Comparative Example A which contained anatase but no optical brightener. The paint of Example 2 contained coated rutile and optical brightener but recorded a percentage of below 100. The paint of Comparative Example B is considered to be typical of current commercially available aqueous latex paints which contain coated sulphate-produced rutile without optical brightener and it recorded a percentage of only 88.

**Preparation of the Paints of Examples 1, 2, and A**

These paints were made by first preparing dispersions of titanium dioxide particles and extender particles and a latex of film-forming acrylic copolymer particles. In the cases of Examples 1 and 2, the latex also contained optical brightener. The dispersions and latex were then blended together to make the final paints.

**a) Preparation of dispersions of Titanium Dioxide Particles**

Three dispersions, namely, Dispersions 1, 2 and A were prepared for use in Examples 1, 2 and A respectively. They were prepared as follows:
Various amounts as specified in Table 2 of water, conventional antifoaming agent and conventional anionic polyelectrolyte dispersing agent of the type sold for use with pigment-grade titanium dioxides were charged at room temperature (18°C) to a 1 litre stainless steel cylindrical container accommodating the blade of a high speed disperser. The disperser blade was rotated at 1000 rpm and the amount of titanium dioxide specified in Table 2 was added over a period of about 5 minutes during which time the disperser speed was gradually increased to 3,000 rpm. Dispersion was then continued for a further 15 minutes whereupon there was produced a dispersion of titanium dioxide particles.

TABLE 2

| Ingredients | Dispersion Parts By Weight | | |
|---|---|---|---|
| | 1 | A | 2 |
| Water | 39.36 | 39.36 | 39.93 |
| Anti-foaming Agent | 0.04 | 0.04 | 0.04 |
| Dispersant | 0.30 | 0.30 | 0.57 |
| Anatase | 60.30 | 60.30 | - |
| Coated rutile | - | - | 59.46 |

Footnote:

Number average particle size of anatase and rutile: 150nm

**b) Preparation of a Dispersion of Extender Particles**

A dispersion of extender particles was used to impart a silk sheen effect to the dried coats of the various paints. The same dispersion of extender particles was used for Examples 1, 2 and A and it was prepared as follows:

80.7 parts by weight of water were charged to a 1 litre stainless steel cylindrical container and the container and contents were chilled by standing on ice. A high speed disperser blade was introduced into the water and stirring started at 100 rpm. 2.5 parts of bentonite clay were added to the water, whilst the disperser speed was gradually increased to 2,000 rpm over a period of 10 minutes. Next, with the disperser speed continuing at 2,000 rpm, 1.0 parts anionic polyelectrolyte dispersant were added followed by 1.0 parts of a polyethylene glycol followed by 0.3 parts of antifoaming agent. 5 minutes later, 2.0 parts kaolin and 10.0 parts chalk were added consecutively. Then the disperser speed was gradually increased to 4,000 rpm over a period of 10 minutes. Finally 2.7 parts of a sodium carboxy methyl cellulose thickener were added slowly and then the disperser speed was increased to 6,000 rpm. Dispersion was stopped after a further 30 minutes at 6,000 rpm whereupon a stable dispersion of extender particles was obtained.

### c) Preparation of the Latex of Acrylic Copolymer

The same latex of acrylic film-forming copolymer was used for Examples 1, 2 and A except for the fact that for Examples 1 and B the latex contained optical brightener whereas the brightener was absent from the latex for Example A. The latex was prepared as follows:

A solution of 2.3 parts by weight methoxy poly(ethylene glycol) methacrylate of number average molecular weight 2,000 (referred to as "MeOPEG2000MA") was made up in a mixture consisting of water, ethanol and 1-methoxy-2-hydroxypropane referred to as ("MHP"). The solution was charged to a round bottom flask fitted with a reflux condensor, a stirrer and a nitrogen purge. The solution was heated to 85°C under nitrogen with gentle stirring.

A mixture of co-monomers consisting of 0.87 parts styrene, 1.25 parts methyl methacrylate and 1.34 parts ethylhexyl acrylate was fed to the flask together with 0.07 parts of azo di-isobutyronitrile free radical initiator. Heating was continued for 30 minutes with refluxing beginning after 10 minutes. A styrene/methyl methacrylate/2-ethylhexyl acrylate seed copolymer was formed.

Next, a mixture consisting of 6.67 parts styrene, 9.67 parts methyl methacrylate, 10.26 parts 2-ethylhexyl acrylate, 0.61 parts allyl methacrylate and (for Examples 1 and 2 only) 0.19 parts of the optical brightener was made up. The optical brightener was 2,2$^1$-(2,5-thiophenediyl)-bis(5-(1,1-dimethylethyl)) benzoxazole. 5.57 parts of MeOPEG2000MA were added to the mixture which was warmed to help the MeOPEG2000MA to dissolve. After it had dissolved, the mixture was cooled back to room temperature (18°C) and 0.47 parts of azo di-isobutryonitrile free radical initiator was added. The mixture was then fed to the round bottom flask at a steady rate over a period of 3 hours whilst continuing stirring and maintaining the temperature at 85°C.

Next a mixture consisting of 2.21 parts styrene, 3.23 parts methyl methacrylate, 3.41 parts 2-ethylhexyl acrylate and 0.20 parts allyl methacrylate was made up at 18°C and 0.09 parts azo di-iosbutyronitrile was added to it. This mixture too was then added to the round bottom flask, the addition being performed at a steady rate over a period of 1 hour whilst stirring and heating to 85°C were maintained. The flask and its contents were cooled to room temperature and passed through a nylon mesh filter. The filtrate comprised an aqueous latex of sterically stabilised particles of acrylic film-forming copolymer having a number average particle size of 257 nm and a minimum film-forming temperature of -2°C.

### d) Preparation of Final Paints

The final paints for Examples 1, 2 and A were made by blending together the appropriate dispersions of titanium dioxide and extender particles with the appropriate latex of acrylic copolymer as follows:

The amounts of the various ingredients used are all specified in Table 3.

The specified amount of the appropriate latex (i.e. with optical brightener for Examples 1 and 2 and without it for Example A) was charged at room temperature to a 1 litre cylindrical plastics container accommodating a conventional laboratory stirrer blade operating at a speed of 400 rpm. The specified amount of the appropriate titanium dioxide dispersion was slowly added to the container over a period of five minutes during which time the stirrer speed was increased to 800 rpm. Stirring at 800 rpm was continued for a further 10 minutes and then reduced to 600 rpm. Next the specified amounts of tap water, voided polymer beads and thixotrope were added consecutively at five minute intervals and stirring at 600 rpm was continued for a final five minutes after the addition of the thixotrope. Finally stirring was stopped and a thixotropic aqueous latex silk paint containing titanium dioxide white opacifier was obtained.

The voided polymer particles used were available from Rohm and Haas of Croydon, England under the name "Ropaque" OP62 and they augment the opacity of the paint. The thixotrope used was a zirconium chelate available from Rhone Poulenc in Manchester, England under the name "Zircomplex" PN and diluted by adding 90 wt% water.

Table 3

| Ingredients | Paint Parts by Weight | | |
|---|---|---|---|
| | 1 | A | 2 |
| Acrylic Latex | 39.7 | *38.9 | 39.2 |
| Anatase: Dispersion 1 | 24.8 | - | - |
| Anatase: Dispersion A | - | 23.8 | - |
| Rutile: Dispersion 2 | - | - | 26.1 |
| Extender Dispersion | 18.4 | 18.1 | 18.2 |
| Tap Water | 6.2 | 8.7 | 5.7 |
| Voided Particles | 9.8 | 9.4 | 9.7 |
| Thixotrope | 1.1 | 1.1 | 1.1 |
| Non-volatiles Content w/w | 43.4 | 42.9 | 44.1 |
| v/v | 35.0 | 33.2 | 35.0 |
| Reflectance: λ max 430nm | 104.2 | 87.8 | 96.9 |

* No optical brightener

**EXAMPLES 3 TO 8**

**Illustration of the Effect of Substituting Anatase by chloride-produced Titanium Dioxide:**

A series of six silk paints containing titanium dioxide white opacifiers and formulated for application to the walls and ceilings of domestic houses were prepared using anatase and/or chloride-produced titanium dioxide in various amounts as shown in Table 4. The formulations were prepared using the procedures outlined for Example 1 and they contained the following ingredients:

| | wt% |
|---|---|
| Conventional aqueous acrylic film-forming copolymer | 38.8 |
| Extenders (3.4 parts by wt) dispersed in water (31.6 parts by wt) | 35.0 |
| "Ropaque" voided particles | 6.1 |
| "Tilcom" AT35 thixotropic agent | 0.9 |
| Optical Brightener (as used in Example 1) | 0.063 |
| Titanium dioxide pigment (see Table 2) | 17.2 |
| Added water | 1.937 |
| | 100.000 |

Each paint was subjected to the Fluorescence Measurement Technique and the percentages of light reflected at λ max 430nm are shown in Table 4.

TABLE 4

| EXAMPLE | 3 | 4 | 5 | 6 | 7 | 8 |
|---|---|---|---|---|---|---|
| Anatase | 17.2 | 13.8 | 10.3 | 8.3 | 4.3 | 0 |
| Chloride-produced Rutile | 0 | 3.4 | 6.9 | 8.9 | 12.9 | 17.2 |
| Reflectance: % of incident light of $\lambda$ max 430nm | 100.5 | 96.6 | 95.6 | 95.1 | 94.4 | 94.2 |

The Anatase and Rutile had number average particle sizes of 150nm and 250nm respectively.

Table 4 shows that as compared with Comparative Examples A and B and despite the presence of greater amounts of extender, the substitution of anatase by chloride-produced titanium dioxide still gives rise to greater amounts of reflected light of wavelength 430 nm.

Examples of polymer-modified particulate anatase or zinc sulphide according to this invention are illustrated by the following description which refers to Figures 1 to 3 of the accompanying drawings of which

Figure 1 shows in diagrammatic section two examples of polymer-modified particulate anatase,

Figure 2 shows in diagrammatic section an example of polymer-modified particulate anatase in which a plurality of modified titanium dioxide particles are agglomerated together,

Figure 3 shows in diagrammatic section an example of polymer modified particulate anatase where the number average particle size (Dp) of the polymer particles is greater than the number average particle size of the titanium dioxide particles.

Figure 1 shows examples 1 or 5 of polymer-modified particulate anatase or zinc sulphide comprising particles 4 of organic polymer attached to or in the vicinity of an irregular hard surface 3 of a particle 2 of anatase. Each particle 4 touches or is close to only a small portion of surface 3 but offers the maximum projection available from a polymer particle made by an emulsion or dispersion polymerisation. Actual modified particles similar to modified particles 1 and 5 can be seen in Figure 3.

Figure 2 shows an example 11 of polymer-modified anatase comprising particles 14 of organic polymer attached to or in the vicinity of irregular hard surfaces 13 of three anatase particles 12. Polymer particles 14a attach to more than one anatase particle 12 and so form an agglomerate.

Figure 3 shows an extreme example of a polymer-modified anatase in which the polymer particles 24 have a greater particle size than the anatase particle 22. All three polymer particles 24 have a particle size which just enables them to attach to the irregular hard surface of anatase particle 22. Again each polymer particle touches or is close to only a small area of the anatase surface.

The attachment of the polymer particles around the particles of anatase largely offsets the loss in opacity which would occur were unmodified anatase to be used instead of conventional rutile. It also reduces the loss in sheen and coin mar resistance caused by the presence of opacifier particles in a dried film of coating composition. The viscosity of the coating composition is also improved as is the scrub resistance of the dried film.

## Claims

1. A paint containing white opacifier suitable for application at ambient temperature which paint also comprises volatile carrier liquid and at least one film-forming polymer present wherein at least some white opacifier is chosen from particles of anatase titanium dioxide and/or zinc sulphide and the paint also comprises optical brightener of a type which can absorb light in the waveband 330 to 400 nm and then re-emit the absorbed energy.

2. A paint as claimed in Claim 1 wherein the optical brightener is present in an amount of from 0.1 to 5 micromole/g non-volatiles content of the paint.

3. A paint as claimed in Claim 1 or Claim 2 wherein the optical brightener has a peak absorption in the waveband 330 to 400 nm.

4. A paint according to Claim 3 wherein the optical brightener is a benzoxazole.

5. A paint as claimed in any one of Claims 1 to 4 wherein the number average particle size of the anatase or zinc sulphide is from 200 to 300nm.

6. A paint as claimed in any one of Claims 1 to 5 wherein the particles of white opacifier are encapsulated in polymer or attached to a discontinuous polymer barrier comprising particles of organic polymer having a particle size which allows them to be accommodated the anatase or zinc sulphide particles.

7. A modification of the paint claimed in any one of the preceding Claims wherein the modification comprises replacement of up to 50 wt% of the white opacifier by rutile and the choice of an optical brightener having a peak absorption in the waveband 370 to 400 nm.

8. A modification of the paint claimed in any one of Claims 1 to 7 wherein from 0 to 100 wt% of the anatase or zinc sulphide is replaced by rutile made by the chloride process.

9. A paint according to any one of Claims 1 to 6 wherein the white opacifier is anatase or zinc sulphide.

10. The use of a paint or modified paint as claimed in any one of the preceding Claims in decorating a surface found on buildings, or on the furnishings or fittings of a building.

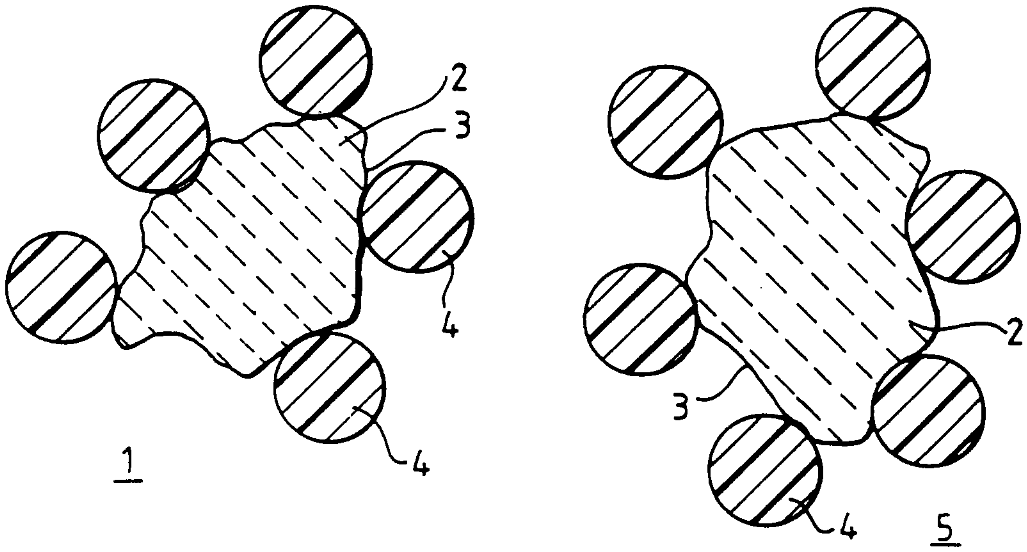


Fig.1.

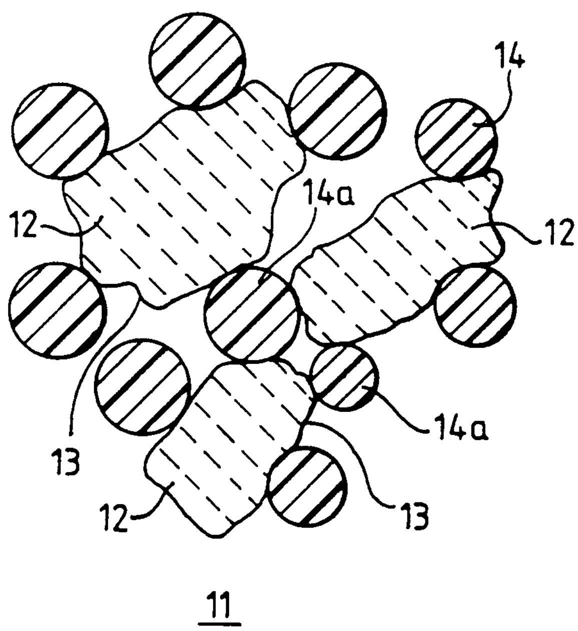


Fig.2.

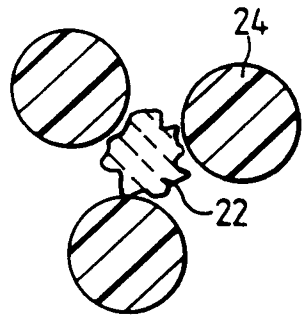


Fig.3.